# EUROPEAN PATENT SPECIFICATION

(11) **EP 1 624 203 B1**
(45) Date of publication and mention of the grant of the patent: **21.01.2009**
(21) Application number: 05077237.5
(22) Date of filing: 27.07.2001
(51) Int. Cl.: F16B 45/02

(54) **Karabiners**
Karabinerhaken
Mousquetons

(30) Priority: 04.08.2000 GB 0019136
(43) Date of publication of application: 08.02.2006
(62) Divisional of application: 01306476.1
(73) Proprietor: Wild Country Limited, Tideswell Buxton Derbyshire SK17 8PY (GB)
(72) Inventor: Brown, Kevin, Warrington Cheshire WA2 0QX (GB)
(74) Representative: Lyons, Andrew John

(56) References cited:
- CH-A- 461 327
- FR-A- 2 766 884
- GB-A- 298 763
- GB-A- 574 508
- US-A- 5 913 479

## Description

This invention concerns snap hooks, also known as karabiners, for use in climbing and other activities requiring connections to be made to ropes, cables and carrying loops for equipment.

Karabiners generally comprise a C-shaped body with its ends curved towards each other and forming a gap closed by a spring loaded gate pivotally mounted on one body end and urged into engagement with the other body end. A thimble or other locking member may be provided either on the gate or the free body end and which is movable, say slidably or along screw threading, to lock the gate in a closed position.

When unlocked, the gate of a karabiner is urged closed and a rope or loop can be snapped into the karabiner by pushing it against the gate to open it. Once the rope or loop is in the confines of the C-shaped body, the gate can spring back to its closed position, where it can be locked, if desired.

There are a number of problems associated with currently available karabiners, such as, the number of components required particularly in providing a spring-loaded gate and in the gate or body having a hooked end on which ropes or other items can snag.

FR 2766884 describes a karabiner in the form of an open ring having two free ends and and two wire gates therebetween which open in opposite direction to prevent accidental removal of a rope. CH 461327 describes a karabiner in the form of an open ring having two free ends and a substantially solid gate therebetween which engages with a hook formed on one of the free ends.

An object of this invention is to provide an improved karabiner.

Accordingly, the present invention provides a karabiner comprising a generally C-shaped body, with its free ends curved towards each other and forming a gap therebetween, and a gate for closing the gap such that it is constrained to close the gap, wherein the gate is formed of a wire member having a first end pivotally mounted on a first free end of the body, the gate being in the form of a loop oriented substantially transversely to the plane of the karabiner body and; the second free end of the body has a slot for receiving the second end of said gate, in which the second end is a shaped end and the slot is shaped to substantially correspond with the shape of the end of the gate, characterised by the slot having a peg therein over which the shaped end locates.

The gate is preferably formed by a wire that is bent double and has its ends bent free towards each other to be located in different holes on opposite sides of the first free end of the body, one hole being offset relative to the other, such that the gate is constrained to close the gap. From its locations in the free end of the body, the two strands of the wire are bent towards each other to approximately a mid-point of the gate until they overlap in a plane of the body.

At its free end the gate may be shaped by folding or bending of the wire to form the shaped end. For example, the end of the gate may be bent over sideways or the loop at the end of the gate enlarged.

The slot may have a first narrow channel part from the second free end of the body to accommodate the wire gate, which leads to a wider second part for accommodating the shaped end of the gate. Between the wide and narrow parts of the slot a ledge may be provided. The ledge is preferably in a plane substantially normal to a longitudinal axis of the gate when the gate closes the gap. Thus, when forces are applied to opposite ends of the karabiner, the ends of the body will tend to bend inwards towards the karabiner body even only to a slight extent which will cause the ledge to be angled upwardly relative to the gate and thus help to retain the shaped end of the gate in the slot of the free end of the body.

The gate or the free end of the body may carry additional locking means for when the gate is closed. In one preferred embodiment a thimble may be provided on the gate that can be moved up the gate to overlap at least partially the second free end of the body. Conveniently an outwardly screw threaded sleeve may be provided on the gate and a corresponding internal screw thread in the thimble threadedly engage the threaded sleeve.

In another preferred embodiment a locking ring may be mounted rotatably on the second free end of the body, the ring having a slot therein, whereby in one position the gate can pass through the slot of the ring for its shaped end to locate in the slot of the second free end of the body and then by rotating the ring, the slot therein is no longer accessible to the gate.

In yet another preferred embodiment, the gate may be provided with a slidable locking member that, for example, can be slid upwards on the gate, i.e. towards the second free end of the body when the gate is closed, wherein the locking member has a finger or the like that extends over the opposite side of the body to that of the slot opening to prevent the gate being pushed open.

Another preferred embodiment provides a locking pin that can be inserted through the second free end of the body of the karabiner and into or through the end of the gate to prevent it being pushed open. The locking pin can be on a flexible or spring-biased tab attached to the gate. Alternatively, the pin can be rotatably mounted in the slot of the second free end of the body between a first position wherein a lip on the end of the pin can pass through a loop of the wire gate and a second position wherein the lip retains the loop of the gate in the slot. The slot of the second free end of the body preferably faces inwards i.e. towards the body of the karabiner. In some embodiments, however, the slot may be on the side of the second free end of the body. In yet other embodiments the slot may be shaped with a part that interengages with the wire gate, especially through a loop thereof.

Alternatively a locking pin is provided on a flexible or spring-biased tab attached to the gate, which pin can be inserted through a hole in the free end of the karabiner body and into a hole or slot of the gate when closed.

This invention will now be further described, by way of example only, with reference to the accompanying drawings, in which:
Figure 1 is a side view of a karabiner closed;
Figure 2 is a top plan view of the karabiner of Figure 1;
Figure 3 is a front view of the karabiner of Figure 1;
Figure 4 is a section on line AA of Figure 3;
Figure 5 is a perspective view from one side and the front of the karabiner of Figure 1;
Figure 6 is a perspective view from the rear and opposite sides of the karabiner of Figure 1;
Figures 7 to 12 are corresponding views to those of Figures 1 to 6 respectively but with the karabiner open and the section line of Figure 9 marked as BB;
Figures 13 and 14 are perspective and front views of the gate receiving free end o the karabiner of Figures 1 to 12;
Figures 15 and 16 are corresponding views to those of Figures 13 and 14 respectively with the karabiner gate closed;
Figure 17 is a section on line CC of Figure 16; and
Figures 18 to 30 show variations on the karabiner of Figure 1.
In particular, figures 27 and 28 show the karabiner as claimed in claim 1.

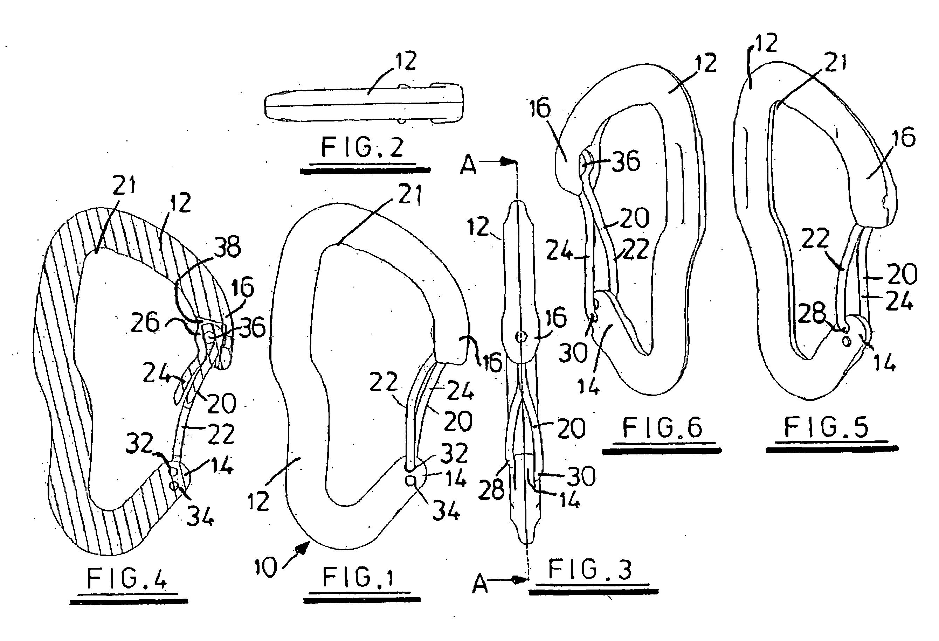

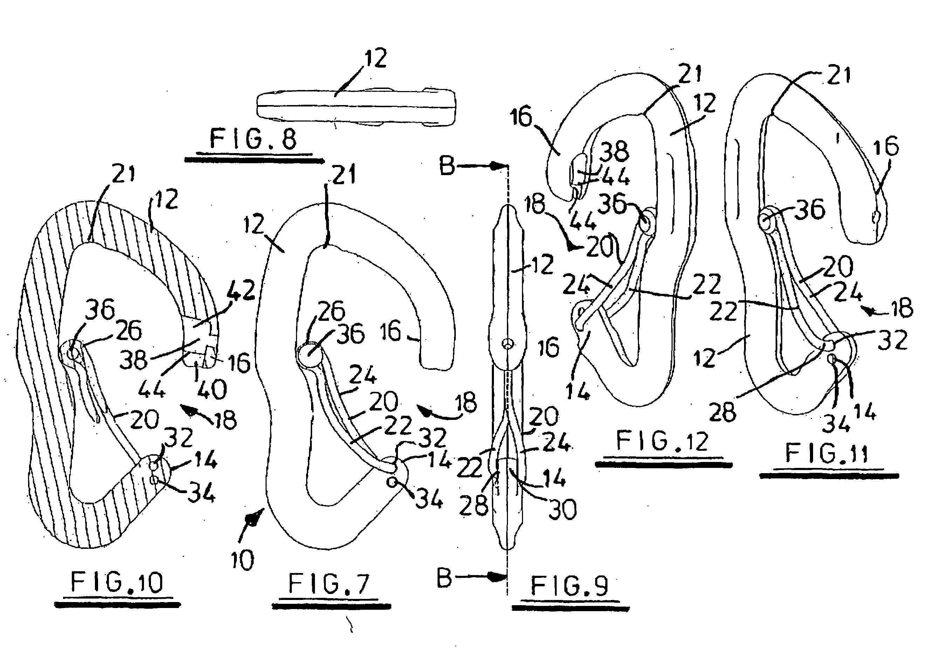

Referring to Figures 1 to 17 of the accompanying drawings, a karabiner 10 comprises a generally C-shaped body 12 having its free ends 14, 16 generally facing each other but leaving a gap 18 therebetween. Pivotally mounted on one free end 14 of the body is a gate 20. The body 12 of the karabiner where it curves top and bottom is shaped to provide locations for ropes or the like. At its top as shown there is a slight recess 21 and at the bottom the body is curved upwards at a more acute angle than at the top to provide a relatively confined location for a rope or the like.

The gate 20 is formed of wire basically bent double. The wire is bent double to form two strands 22, 24 with a loop , 26 between them. The two strands 22, 24 overlie each other for a first part from the loop, so that in the karabiner they are in the plane of the body. From the end of the first part, the two strands diverge to opposite sides of the body before bending inwards to form ends 28, 30 that each locate in separate holes 32, 34 one above the other in the free end 14 of the karabiner body. The shaping of the gate and the offsetting of its pivot points urge the gate to a closed position as shown in Figures 1 to 6 of the drawings. Once pressure is applied to the gate inwardly, it will open but always spring back to a closed position when the pressure is removed. Thus, a rope or the like can be pushed into the karabiner through the gate which then snaps back to close the karabiner and retain the rope or the like therein.

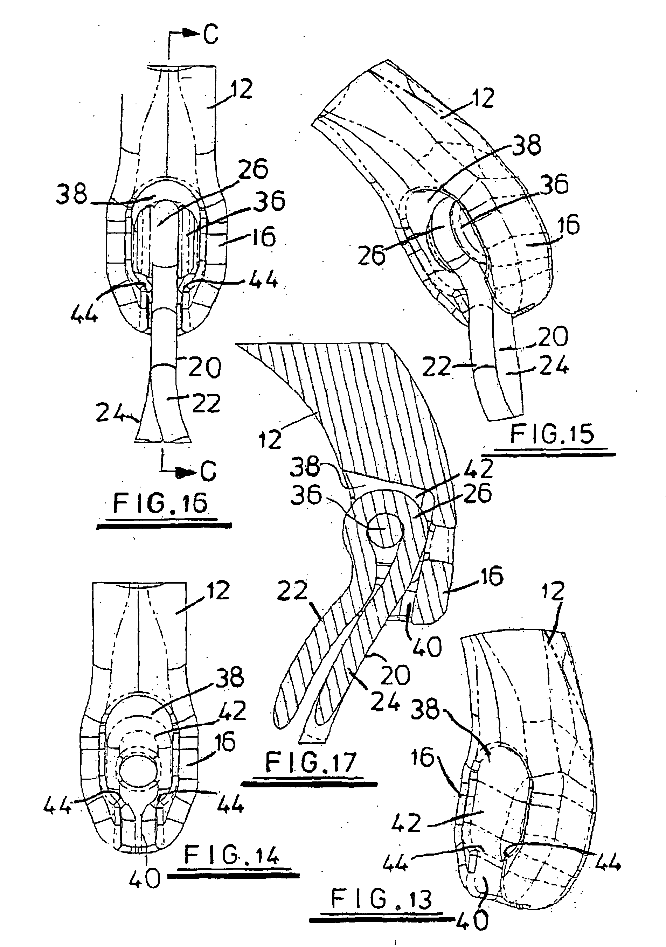

The free end of the gate has located in the loop 26 a nut 36 and the free end 16 of the karabiner body has a shaped slot 38, which receives the nut 36 when the gate is closed. The slot 38 is shown in more detail in Figures 13 to 17. The slot 38 has a first narrow part 40 open to the end of the free end 16 of the body and leading to a wide part 42 forming ledges 44 on opposite sides of the slot. The ledges are generally normal to a longitudinal axis of the gate in its closed position. The narrow part 40 accommodates the overlying strands of the gate and the wide part of the nut 36.

When loads are applied to opposite ends of the karabiner body, the effect is to elongate the body and draw the free ends 14, 16 inwards. That has the effect of changing the angle of the ledges 44 with respect to the longitudinal axis of the gate to the extent that the ledges slope upwardly in the direction of opening of the gate rendering it more difficult for the gate to be opened inadvertently in a load situation. This is an important safety feature of the illustrated karabiner.

Furthermore, as can be seen, the free end 16 of the karabiner has a generally smooth profile, which advantageously can avoid the risk of snagging of ropes etc thereon.

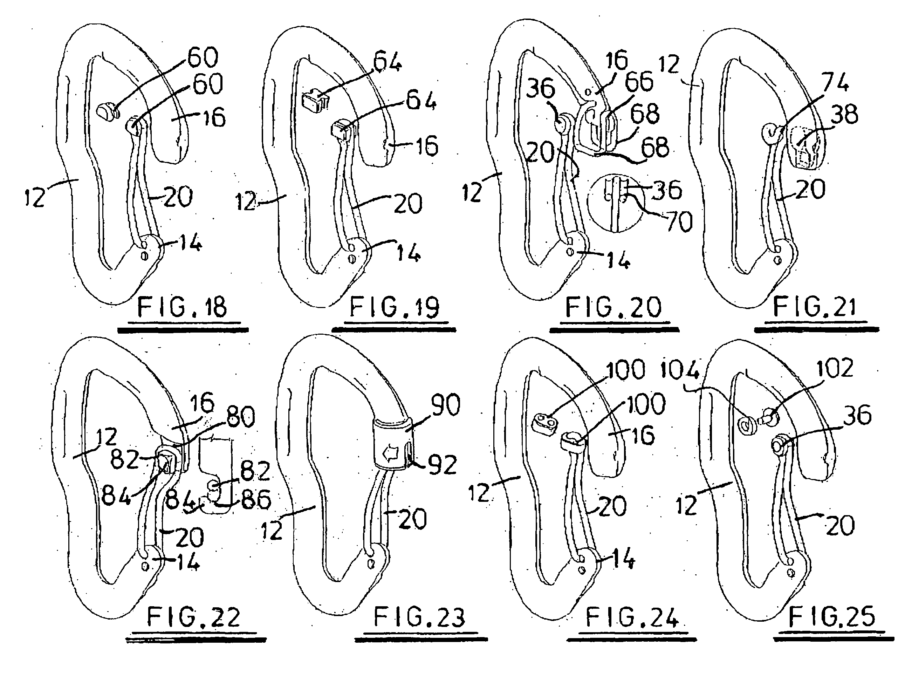

Figures 18 to 31 show variations on the basic karabiner of Figures 1 to 17 and only the differences will be described in detail below. Like parts have been given the same reference numbers throughout for ease understanding.

In Figure 18 instead of a generally circular nut, nut 60 at the end of the gate 20 is generally semi-circular in side view. In Figure 19, the karabiner has a rectangular nut 64 at the end of the gate 20.

Figure 20 shows a karabiner with a different means of forming the slot for receiving the free end of the gate 20. The slot is provided by a wire cage 66 fixed to the free end of the body 12. The cage is formed of a wire bent to form two opposed U-shaped sides 68. The sides converge outwardly of the karabiner, so that nut 36 can snap into the cage but not pass through it. The nut can have annular grooves 70 either side of the gate to locate on the wire of the cage.

In Figure 21 of the drawings, the end 74 of the gate 20 is folded over sideways instead of using a nut and the slot 38 in the free end of the body is shaped to correspond to the shape of the end of the gate.

Figure 22 of the drawings shows a karabiner with slot 80 for the gate accessible from the side of the free end of the body. The gate has a slightly larger loop 82 at its free end that fits over peg 84 and into groove 86 in the top surface of the spigot. To open the gate, it has to be pulled sideways initially.

Figure 23 of the drawings is included to show a karabiner with a safety lock in the form of rotatable thimble 90 on the free end of the body. The thimble 90 has a slot 92 therein that when aligned inwardly with the gate allows the gate to be opened and to close but when rotated out of that alignment locks the gate closed.

In Figure 24 the gate of the karabiner has a nut 100 that is slid onto.the gate. Figure 25 shows how the nut 36 used in the karabiner of Figure 1 may be formed in two parts, one male 102 and the other 104 female.

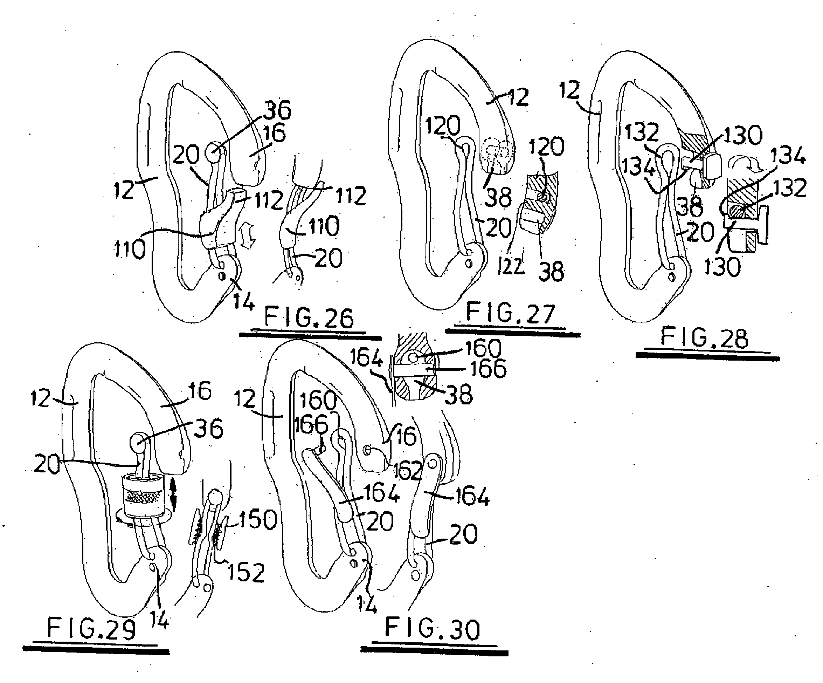

Turning to Figure 26 of the drawings, a karabiner of the type of Figure 1 has a sliding locking member 110 on the gate, so that when the gate is closed, the locking member 110 can be slid up towards the free end 16 of the body. The locking member has a finger 112 that then overlies the body on the opposite side to the slot, so that the gate cannot be opened inadvertently.

Figure 27 of the drawings illustrates an embodiment of the karabiner as claimed in claim 1 and shows how the slot 38 is shaped to correspond to the shape of the gate end. In this case, the gate end is in the form of a transverse loop 120 and the slot has a peg 122 therein, over which the loop locates.

In Figure 28, the slot 38 at the free end of the body of the karabiner has a rotatable locking pin 130 through the end of the body. The gate has a loop 132 at its free end that locates over the pin, The pin has a lip 134, so that with the lip downwards as illustrated the loop 132 can locate on the pin but when the pin is rotated through 180°, the lip 134 prevents the loop 132 from being freed.

Figure 29 shows a locking thimble 150 provided on the gate. There is an outwardly screw-threaded sleeve 152 on the gate and the thimble is correspondingly threaded, so as to move upwards or downwards when rotated. When the thimble is moved upwards, it partly overlies the free end of the body, so that the gate cannot be opened.

Finally in Figure 30 of the drawings, a karabiner has a gate 20 with a loop 160 at its free end and there is a hole 162 through the free end 16 of the body in the region of the gate receiving slot 38, so that when the gate is closed the loop 160 and hole 162 coincide. A strap 164 attached to the gate has a pin 166 that can be pushed or sprung into the hole 162 and through the loop 160 to lock the gate closed.

## Claims

1. A karabiner (10) comprising a generally C-shaped body (12), with its free ends (14 & 16) curved towards each other and forming a gap therebetween, and a gate (20) for closing the gap such that it is constrained to close the gap, wherein
the gate (20) is form of a wire member having a first end pivotally mounted on a first free end (14) of the body (12), the gate (20) being in the form of a loop oriented substantially transversely to the plane of the karabiner body (12) and;
the second free and (16) of the body (12) has a slot (38) for receiving the second end (120) of said gate (20), in which the second end (120) is a shaped end (120) and the slot (38) is shaped to substantially correspond with the shape of the end of the gate (20), **characterised by** the slot (38) having a peg (122) therein over which the loop (120) locates.

2. A karabiner as claimed in claim , wherein the peg (122) has a surface adapted to engage the shaped end (120), the surface being in a plane substantially normal to a longitudinal axis of the gate (20) when said gate closes the gap.

3. A karabiner as claimed in claim 2, wherein the free ends of the body (14 & 16) are adapted to be drawn inwards towards the karabiner body (12) and to cause the surface to slope upwards towards the top of the karabiner body (12) and in the direction of opening of the gate when loads are applied to opposite ends of the karabiner body (12).

4. A karabiner as claimed in any one of claims 1 to 3, wherein the gate (20) is formed by a wire that is bent double and has its free ends (28 & 30) bent towards one another to be located in different holes (32 & 34) on opposite sides of said first free end (14), in which one hole is offset relative to the other.

5. A karabiner as claimed in any of claims 1 to 4, wherein at its free end the gate (20) is shaped by folding or bending of the wire to form a shaped end.

6. A karabiner as claimed in claim 5, wherein the end of the gate (20) is bent over sideways (74).

7. A karabiner as claimed in any one of claims 1 to 6, wherein the loop (26) at the end of the gate is enlarged.

8. A karabiner as claimed in any one of claims 1 to 7, wherein the slot (38) has a first narrow channel part from the second free end (16) of the body to accommodate the wire gate (20), which first narrow channel part leads to a wider second part for accommodating the shaped end (120) of the gate (20).

9. A karabiner as claimed in claim 8, wherein a ledge (44) is provided between the wide and narrow parts of the slot.

10. A karabiner as claimed in claim 9, wherein the ledge (44) is in a plane substantially normal to a longitudinal axis of the face body (12) when the gate closes the gap.

11. A karabiner as claimed in any one of claims 1 to 10, wherein the gate (20) or the second free end (16) of the body (12) carries additional locking means (90, 164, 110, 130) for when the gate is closed.

12. A karabiner as claimed in claim 11, wherein a thimble (90) is provided on the gate (20) that can be moved up the gate (20) to overlap at least partially the free end (16) of the body (12).

13. A karabiner as claimed in claim 12, wherein an outwardly screw threaded sleeve (152) is provided on the gate and a corresponding internal screw thread in the thimble (150) threadedly engages the threaded sleeve.

14. A karabiner as claimed' in claim 11, wherein a locking ring is mounted rotatably on the second free end (16) of the body (12), the ring having a slot therein, whereby in one position the gate (20) can pass through the slot of the ring for its shaped end to locate in the slot of the second free end (16) of the body (12) and then by rotating the ring, the slot therein is no longer accessible to the gate (20).

15. A karabiner as claimed in claim 11, wherein the gate (20) is further provided with a slidable locking member (110).

16. A karabiner as claimed in claim 15, wherein the locking member (110) is slidable towards the second free end (16) of the body (12) when the gate is closed, wherein the locking member has a finger (112) or the like that extends over the opposite side of the body (12) to that of the slot opening to prevent the gate being pushed open.

17. A karabiner as claimed in claim 11 having a locking pin (130) that is insertable through the second free end (16) of the body (12) of the karabiner and into or through the end of the gate (132) to prevent it being pushed open.

18. A karabiner as claimed in claim 17, wherein the locking pin (130) is on a flexible or spring-biased tab attached to the gate (20).

19. A karabiner as claimed in claim 17 wherein the pin (130) is rotatably mounted in the slot of the second free end (16) of the body (12) between a first position wherein a lip (134) on the end of the pin (130) can pass through a loop (132) of the wire gate (20) and a second position wherein the lip (134) retains the loop (132) of the gate in the slot (38).

20. A karabiner as claimed in any one of claims 1 to 19, wherein the slot (38) of the second free end (16) of the body (12) faces inwards towards the body (12) of the karabiner (10).

21. A karabiner as claimed in any one of claims 1 to 19, wherein the slot (38) is on the side of the second end (16) of the body (12).

## Patentansprüche

1. Karabinerhaken (10) umfassend einen im Wesentlichen C-förmigen Körper (12) dessen freie Enden (14 & 16) zueinander bin gebogen sind und einen Spalt dazwischen bilden, und einen Verschluss (20) zum Verschließen des Spalts, so dass er gezwungen ist den Spalt zu schließen, wobei
der Verschluss (20) aus einem Drahtelement gebildet ist, wobei ein erstes Ende drehbar an einem ersten freien Ende (14) des Körpers (12) angebracht ist, wobei der Verschluss (20) in Form einer Schlinge ist, die im Wesentlichen schräg zur Ebene des Körpers (12) des Karabinerhakens ausgerichtet ist und;
das zweite freie Ende (16) des Körpers (12) einen Schlitz (38) aufweist, zum Aufnehmen des zweiten Endes (120) des Verschlusses (20), wobei das zweite Ende (120) ein geformtes Ende (120) und der Schlitz (38) gebildet ist, um im Wesentlichen der Form des Verschlussendes (20) zu entsprechen, **dadurch gekennzeichnet, dass** der Schlitz (38) einen Zapfen (122) darin aufweist, über dem sich die Schlinge (120) befindet.

2. Karabinerhaken nach Anspruch 1, wobei der Zapfen (122) eine Oberfläche hat, die angepasst ist, um mit dem geformten Ende (120) einzugreifen, wobei sich die Oberfläche in einer Ebene befindet, die im Wesentlichen senkrecht zu einer Längsachse des Verschlusses (20) ist wenn der Verschluss den Spalt verschließt.

3. Karabinerhaken nach Anspruch 2, wobei die freien Enden des Körpers (14 & 16) angepasst sind, um nach innen zum Kambinerhakenkörpcr (12) hin gebogen zu werden und die Oberfläche dazu zu bringen, nach oben zum oberen Teil des Karabinerhakenkörpers (12) hin gebogen zu werden und in Richtung der Öffnung des Verschlusses, wenn Belastungen an entgegengesetzten Enden des Karabinerhakenkörpers (12) angewandt werden.

4. Karabinerhaken nach irgendeinem der Anspruche 1 bis 3, wobei der Verschluss (20) durch einen Draht gebildet wird, der doppelt gebogen ist, wobei die freien Enden (28 & 30) davon zueinander gebogen sind, um in verschiedenen Löchern (32 & 34) an entgegengesetzten Seiten des ersten freien Endes (14) angeordnet wird, wobei ein Loch im Verhältnis zum anderen versetzt ist.

5. Karabinerhaken nach irgendeinem der Ansprüche 1 bis 4, wobei der Verschluss (20), an seinem freien Ende, durch Falten oder Biegen des Drahtes gebildet wird, um ein geformtes Ende zu bilden.

6. Karabinerhaken nach Anspruch 5, wobei das Ende des Verschlusses (20) seitwärts (74) umgebogen wird.

7. Karabinerhaken nach irgendeinem der Ansprüche 1 bis 6, wobei die Schlinge (26) am Ende des Verschlusses vergrößert ist.

8. Karabinerhaken nach irgendeinem der Ansprüche 1 bis 7, wobei der Schlitz (38) einen ersten schmalen Kanalabschnitt vom zweiten freien Ende (16) des Körpers hat, um den Drahtverschluss (20) aufzunehmen, wobei der erste schmale Kanalabschnitt zu einem breiteren zweiten Abschnitt führt, um das geformte Ende (120) des Verschlusses (20) aufzunehmen,

9. Karabinerhaken nach Anspruch 8, wobei ein Absatz (44) zwischen dem breiten und dem schmalen Abschnitt des Schlitzes vorhanden ist.

10. Karabinerhaken nach Anspruch 9, wobei der Absatz (44) in einer Ebene im Wesentlichen senkrecht zu einer Längsachse des Verschlusskörpers (20) ist, wenn der Verschluss den Spalt verschließt.

11. Karabinerhaken nach irgendeinem der Ansprüche 1 bis 10, wobei der Verschluss (20) oder das zweite freie Ende (16) des Körpers (12) eine zusätzlich Sperreinrichtung (90, 164, 110, 130) dafür trägt, wenn der Verschluss verschlossen wird.

12. Karabinerhaken nach Anspruch 11, wobei eine Seilkausche (90) auf dem Verschluss angebracht ist, die aufwärts zum Verschluss (20) bewegt werden kann, um das freie Ende (16) des Körpers (12) zumindest teilweise zu überlappen.

13. Karabinerhaken nach Anspruch 12, wobei eine mit Außenschraubengewinde versehene Hülse (152) am Verschluss vorhanden ist und ein entsprechendes Innenschraubengewinde in der Seilkausche (150) verschraubbar mit der Gewindehülse in Eingriff kommt.

14. Karabinerhaken nach Anspruch 11, wobei ein Sperring drehbar am zweiten freien Ende (16) des Körpers (12) angebracht ist, wobei der Ring einen Schlitz darin aufweist, wobei, in einer Position, der Verschluss (20) durch den Schlitz des Ringes hindurchgehen kann, damit sein geformtes Ende im Schlitz des zweiten freien Endes (16) des Körpers (12) angeordnet wird und danach durch Drehen des Ringes der Schlitz darin nicht länger für den Verschluss (20) zugänglich ist.

15. Karabinerhaken nach Anspruch 11, bei dem der Verschluss (20) ferner mit einem verschiebbaren Sperrelement (110) versehen ist.

16. Karabinerhaken nach Anspruch 15, wobei das Sperrelement (110) zum zweiten freien Ende (16) des Körpers (12) verschiebbar ist, wenn der Verschluss verschlossen wird, wobei das Sperrelement einen Finger (112) oder Ähnliches aufweist, der sich über die entgegengesetzte Seite des Körpers (12) zur Schlitzöffnung erstreckt, um zu verhindern, dass der Verschluss aufgedrückt wird.

17. Karabinerhaken nach Anspruch 11, der einen Sperrstift (130) aufweist, der durch das zweite freie Ende (16) des Karabinerhakenkörpers (12) und in oder durch das Ende des Verschlusses (132) eingesetzt werden kann, um zu verhindern, dass er aufgedrückt wird.

18. Karabinerhaken nach Anspruch 17, wobei der Sperrstift (130) auf einem elastischen oder federbelasteten Vorsprung ist, der am Verschluss (20) befestigt ist.

19. Karabinerhaken nach Anspruch 17, wobei der Stift (130) drehbar im Schlitz des zweiten freien Endes (16) des Körpers (12) zwischen einer ersten Position, bei der ein Rand (134) am Ende des Stiftes (130) durch eine Schlinge (132) des Drahtverschlusses (20) hindurchgehen kann, und einer zweiten Position angebracht ist, bei der der Rand (134) die Schlinge (132) des Verschlusses im Schlitz (38) hält.

20. Karabinerhaken nach irgendeinem der Ansprüche 1 bis 19, wobei der Schlitz (38) des zweiten freien Endes (16) des Körpers (12) nach innen zum Körper (12) des Karabinerhaken (10) hin liegt.

21. Karabinerhaken nach irgendeinem der Ansprüche 1 bis 19, wobei sich der Schlitz (38) auf der Seite des zweiten freien Endes (16) des Körpers (12) befindet,

## Revendications

1. Mousqueton (10) comprenant un corps (12) généralement en forme de C, dont les extrémités libres (14 & 16) sont recourbées l'une vers l'autre et forment un espace entre elles, et une grille (20) pour fermer l'espace de sorte qu'il est contraint de fermer l'espace, dans lequel
la grille (20) est formée d'un fil de fer ayant une première extrémité montée de manière pivotable sur une première extrémité libre (14) du corps (12), la grille (20) étant sous la forme d'une boucle orientée transversalement au plan du corps du mousqueton (12) et ;
la deuxième extrémité libre (16) du corps (12) comprend une fente (38) pour recevoir la deuxième extrémité (120) de ladite grille (20), la deuxième extrémité (120) étant une extrémité profilée (120) et la fente (38) étant profilée pour correspondre substantiellement à la forme de l'extrémité de la grille (20), **caractérisé en ce que** la fente (38) comporte un tenon (122) au-dessus de laquelle est située la boucle (120).

2. Mousqueton selon la revendication 1, dans lequel le tenon (122) comporte une surface adaptée pour s'engager dans l'extrémité profilée (120), la surface étant dans un plan substantiellement perpendiculaire à un axe longitudinal de la grille (20) quand ladite grille ferme l'espace.

3. Mousqueton selon la revendication 2, dans lequel les extrémités libres du corps (14 & 16) sont adaptées pour être ramenées vers l'intérieur vers le corps du mousqueton (12) et pour forcer la surface à s'infléchir vers le haut vers la partie supérieure du corps du mousqueton (12) et dans la direction d'ouverture de la grille lorsque des charges sont appliquées aux extrémités opposées du corps du mousqueton (12).

4. Mousqueton tel que revendiqué dans l'une quelconque des revendications 1 à 3, dans lequel la grille (20) est formée par un fil métallique plié en deux et dont les extrémités libres (28 & 30) sont pliées l'une vers l'autre pour être situées dans des trous différents (32 & 34) sur des côtés opposés de ladite première extrémités libre (14), un trou étant décalé par rapport à l'autre.

5. Mousqueton selon l'une quelconque des revendications 1 à 4, dans lequel, à son extrémité libre, la grille (20) est formée en pliant ou courbant le fil de fer pour former une extrémité profilée.

6. Mousqueton selon la revendication 5, dans lequel l'extrémité de la grille (20) est pliée de côté (74).

7. Mousqueton tel que revendiqué dans l'une quelconque des revendications 1 à 6, dans lequel la boucle (26) à l'extrémité de la grille est agrandie.

8. Mousqueton tel que revendiqué dans l'une quelconque des revendications 1 à 7, dans lequel la fente (38) comporte une première partie de canal détroit partant de la deuxième extrémité libre (16) du corps pour accommoder la grille en fil métallique (20) laquelle première partie de canal étroit mène à une deuxième partie plus large pour accommoder l'extrémité profilée (120) de la grille (20).

9. Mousqueton selon la revendication 8, dans lequel une moulure (44) est située entre les parties large et étroite de la fente.

10. Mousqueton selon la revendication 9, dans lequel la moulure (44) est dans un plan substantiellement perpendiculaire à un axe longitudinal du corps de la grille (12) quand la grille ferme l'espace

11. Mousqueton selon l'une quelconque des revendications 1 à 10, dans lequel la grille (20) ou la deuxième extrémité libre (16) du corps (12) porte des moyens de verrouillage additionnels (90, 164, 110, 130) pour quand la grille est fermée.

12. Mousqueton selon la revendication 11, dans lequel une cosse (90) se trouve sur la grille (20) pouvant être remontée le long de la grille (20) pour chevaucher au moins partiellement l'extrémité libre (16) du corps (12).

13. Mousqueton selon la revendication 12, dans lequel un manchon fileté à l'extérieur (152) se trouve sur la grille et un filetage interne correspondant dans la cosse (150) s'engage par filetage dans le manchon fileté.

14. Mousqueton selon la revendication 11, dans lequel une bague de verrouillage est montée de manière rotative sur la deuxième extrémité libre (16) du corps (12), la bague comportant une fente, et la grille (20), dans une position, pouvant passer à travers la fente de la bague afin que son extrémité profilée se trouve dans la fente de la deuxième extrémité libre (16) du corps (12), puis en tournant la bague, la fente qui s'y trouve n'est plus accessible à la grille (20).

15. Mousqueton selon la revendication 11, dans lequel la grille (20) est en outre pourvu d'un élément de verrouillage coulissable (110).

16. Mousqueton selon la revendication 15, dans lequel l'élément de verrouillage (110) est coulissable vers la deuxième extrémité libre (16) du corps (12) quand la grille est fermée, l'élément de verrouillage comportant un doigt (112) ou similaire qui s'étend sur le côté opposé du corps (12) vers celui de l'ouverture de la fente pour empêcher la grille de s'ouvrir.

17. Mousqueton selon la revendication 11 comportant une goupille de verrouillage (130) insérable à travers la deuxième extrémité libre (16) du corps (12) du mousqueton et dans ou à travers l'extrémité de la grille (132) pour l'empêcher de s'ouvrir.

18. Mousqueton selon la revendication 17, dans lequel la goupille de verrouillage (130) est sur une patte flexible ou sollicitée par ressort attachée à la grille (20).

19. Mousqueton selon la revendication 17, dans lequel la goupille (130) est montée de manière rotative dans la fente de la deuxième extrémité libre (16) du corps (12) entre une première position dans laquelle un rebord (134) sur l'extrémité de la goupille (130) peut passer à travers une boucle (132) de la grille en fil métallique (20) et une deuxième position dans laquelle le rebord (134) retient la boucle (132) de la grille dans la fente (38).

20. Mousqueton selon l'une quelconque des revendications 1 à 19, dans lequel la fente (38) de la deuxième extrémité libre (16) du corps (12) est dirigée vers l'intérieur vers le corps (12) du mousqueton (10).

21. 1 . Mousqueton selon l'une quelconque des revendications 1 à 19, dans lequel la fente (38) est sur le côté de la deuxième extrémité libre (16) du corps (12).
